(19) Europäisches Patentamt
European Patent Office
Office européen des brevets

(11) **EP 2 366 603 A1**

(12) **EUROPEAN PATENT APPLICATION**

(43) Date of publication:
**21.09.2011 Bulletin 2011/38**

(51) Int Cl.:
**B62D 5/04** *(2006.01)*     **H02P 21/06** *(2006.01)*

(21) Application number: **11158489.2**

(22) Date of filing: **16.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.03.2010 JP 2010060751**

(71) Applicant: **Honda Motor Co., Ltd.**
**Tokyo 107-8556 (JP)**

(72) Inventors:
 • **Ohno, Satoshi**
   **Saitama 351-0193 (JP)**
 • **Miyoshi, Takashi**
   **Saitama 351-0193 (JP)**
 • **Yoneda, Atsuhiko**
   **Saitama 351-0193 (JP)**
 • **Shimizu, Yasuo**
   **Saitama 351-0193 (JP)**

(74) Representative: **Herzog, Markus et al**
**Weickmann & Weickmann**
**Patentanwälte**
**Postfach 86 08 20**
**81635 München (DE)**

(54)  **Electric power steering apparatus and electric motor driving controller used for the apparatus**

(57)     A q-axis target current setting unit generates a q-axis current command value based on a steering input signal from a steering torque sensor and a vehicle speed signal from a vehicle speed sensor. An electric motor generates a predetermined torque based on the q-axis current command value and a q-axis current (a torque current) to which a fed back q-axis real current is added. On the other hand, a d-axis correction current setting unit sets a field weakening current (a d-axis current) in response to a voltage saturation (duty ratio = driving voltage of electric motor / power supply voltage) output from a voltage saturation calculating unit. For this reason, when the voltage saturation becomes high, distortion (harmonics component) in current can be decreased by decreasing the voltage saturation while keeping the torque constant using a predetermined torque current, and a torque ripple can be suppressed.

## FIG.12

**Description**

BACKGROUND OF THE INVENTION

Field of the Invention

The present invention relates to an electric power steering apparatus and an electric motor driving controller used for the apparatus, and more particularly, to an electric power steering apparatus for assisting a steering effort of a vehicle by power of the electric motor and the electric motor driving controller used for the apparatus.

Description of the Related Art

Conventionally, a permanent magnet type brushless DC motor has been preferably used as an electric motor used for an electric power steering apparatus mounted on a vehicle such as an automobile, etc. In such an electric motor (hereinafter, merely referred to as a motor), when a driving voltage of the electric motor approaches a power supply voltage (battery voltage) of an ECU (i.e., when a voltage saturation of the driving voltage (= driving voltage/power supply voltage) approaches 100%), there is no room for power supply to the electric motor, a distortion occurs in a current waveform of a driving current, and a torque ripple is generated in the electric motor. As a result, an unusual noise occurs in the electric motor, a steering feeling becomes worse, and salability as a vehicle is damaged. For this reason, in order to avoid such problems, the voltage saturation of the driving voltage of the electric motor (or a duty ratio which is a ratio of ON time to 1 cycle time in a PWM (Pulse Width Modulation) control waveform) is calculated, and a current command limit value of the electric motor is corrected based on the voltage saturation (the duty ratio). As a result, the voltage saturation of the driving voltage of the electric motor is suppressed (i.e., the voltage saturation (the duty ratio) of the driving voltage of the electric motor is decreased), occurrence of the unusual noise in the electric motor is prevented, and the degradation in the steering feeling is suppressed (e.g., see JP 2008-079387 A). According to this technique, as the power supply voltage (battery voltage) is decreased, the driving voltage of the electric motor is decreased so as to decrease the driving current. Therefore, occurrence of the torque ripple of the electric motor is suppressed so as to prevent the unusual noise caused by an uneven rotation.

Also, by supplying a field weakening current to the electric motor of the electric power steering apparatus if required, a rotational speed of the electric motor is increased. As a result, a smooth steering feeling can be achieved in the steering system (e.g., see JP 2004-040883 A).

However, because the current command limit value of the electric motor is corrected based on the voltage saturation (the duty ratio) of the driving voltage in the technique disclosed in JP 2008-079387 A, the torque ripple of the electric motor is suppressed, but the driving current of the electric motor is limited in a saturated state of the driving voltage. For this reason, in the technique disclosed in JP 2008-079387 A, the reduction in the driving current makes the torque of the electric motor to be limited, and a steering operation of the electric power steering apparatus becomes heavy. As a result, a light steering feeling can not be obtained in the electric power steering apparatus.

On the other hand, in the technique disclosed in JP 2004-040883 A, when the power supply voltage (e.g., the battery voltage) is decreased and there is no room for reduction in the driving voltage of the electric motor (i.e., the driving voltage saturation is increased), a distortion may occur in a torque current of the electric motor. That is, in the technique disclosed in JP 2004-040883 A, the torque ripple occurs in the electric motor, and good steering feeling may not be obtained.

In view of the foregoing, an object of the present invention is to provide an electric power steering apparatus and an electric motor driving controller used for the apparatus which can keep a predetermined torque while suppressing the torque ripple of the electric motor.

SUMMARY OF THE INVENTION

In order to achieve the above object, the present invention provides an electric power steering apparatus for controlling drive of an electric motor for assisting a steering in response to a driver's steering input, comprising: a steering input detecting unit for detecting a magnitude of the steering input; a torque current setting unit for setting a torque current of the electric motor based on a signal from the steering input detecting unit; a field weakening current setting unit for setting a field weakening current to weaken a field of the electric motor; an electric motor driving controller for controlling drive of the electric motor based on the torque current set by the torque current setting unit and the field weakening current set by the field weakening current setting unit; and a voltage saturation calculating unit for calculating a voltage saturation of the electric motor defined by a ratio of a driving voltage of the electric motor to a power supply voltage of the electric motor driving controller, wherein the field weakening current setting unit sets the field weakening current in response to the voltage saturation calculated by the voltage saturation calculating unit.

According to this constitution, when the voltage saturation defined by the ratio of the driving voltage of the electric motor to the power supply voltage is high, the rotational speed is increased by supplying the large field weakening current. Also, when the voltage saturation is low, the rotational speed is decreased by decreasing the field weakening current. On the other hand, because the driving voltage can be decreased by increase in the rotational speed, a feedback control is performed so that the voltage saturation is decreased. Therefore, because there is room for the driving voltage of the electric motor, the predetermined torque can be kept by a constant torque current while suppressing the torque ripple of the electric motor. That is, the torque ripple of the electric motor caused by the voltage saturation of the driving voltage can be suppressed while keeping the torque of the electric motor constant. For this reason, the electric power steering apparatus can achieve the light steering feeling.

Also, the field weakening current setting unit sets the field weakening current so that a value of the voltage saturation calculated by the voltage saturation calculating unit becomes equal to or less than a predetermined value. According to this constitution, because a field weakening control is performed so as to set the field weakening current so that the voltage saturation is equal to or less than the predetermined value (e.g., 90%), there is room for the driving voltage of the electric motor at any time. Therefore, because a large torque ripple does not occur in the electric motor, the light steering feeling can be kept at any time.

Also, the nearer to an upper limit the voltage saturation calculated by the voltage saturation calculating unit is, the larger absolute value of the field weakening current the field weakening current setting unit sets. According to this constitution, the nearer to the upper limit the voltage saturation is, the larger the field weakening current is set. Therefore, when the voltage saturation becomes approximately 100%, the voltage saturation can be decreased so that there is room for the driving voltage while keeping the torque constant. As a result, because the large torque ripple does not occur in the electric motor, the light steering feeling can be kept at any time.

Also, the present invention can provide an electric motor controller used for the electric power steering apparatus. That is, the present invention can provide the electric motor controller used for an electric power steering apparatus for controlling drive of an electric motor for assisting a steering in response to a magnitude of a steering input from outside, comprising: a steering input detecting unit for detecting a magnitude of the steering input; a torque current setting unit for setting a torque current of the electric motor based on a signal from the steering input detecting unit; a field weakening current setting unit for setting a field weakening current to weaken a field of the electric motor; an electric motor driving controller for controlling drive of the electric motor based on the torque current set by the torque current setting unit and the field weakening current set by the field weakening current setting unit; and a voltage saturation calculating unit for calculating a voltage saturation of the electric motor defined by a ratio of a driving voltage of the electric motor to a power supply voltage of the electric motor driving controller, wherein the field weakening current setting unit sets the field weakening current in response to the voltage saturation calculated by the voltage saturation calculating unit.

According to this constitution, because the field weakening current is set based on the voltage saturation of the electric motor, the torque ripple of the electric motor caused by the voltage saturation of the driving voltage can be suppressed while keeping the torque of the electric motor constant. For this reason, the electric motor controller of the electric power steering apparatus can achieve the light steering feeling.

BRIEF DESCRIPTION OF THE DRAWINGS

FIG. 1 is a block diagram showing an electric power steering apparatus applied to an embodiment of the present invention;
FIG 2 is a block diagram showing an electric motor control system applied to the embodiment of the present invention;
FIG. 3 is a block diagram showing an internal constitution of a PWM converter;
FIG. 4 is a wave form chart of a main part of the PWM converter;
FIG. 5 is a block diagram showing an internal constitution of a d-axis correction current setting unit of this embodiment;
FIG. 6 is a block diagram showing an internal constitution of a conventional d-axis correction current setting unit;
FIG. 7 is a graph showing output characteristics of a conventional electric motor for different voltage saturations (Duties) of the electric motor;
FIG. 8 is a graph showing driving currents and torque ripples of the electric motor for different voltage saturations (Duties) based on the output characteristics of the electric motor;
FIG. 9 is a graph showing output characteristics of an electric motor of this embodiment for different voltage saturations (Duties) of the electric motor;
FIG. 10 is a graph showing driving currents and torque ripples of the electric motor for different voltage saturations on condition that a field is weakened;
FIG. 11 is a block diagram showing a concrete example of the d-axis correction current by a field weakening current setting function of the d-axis correction current setting unit of this embodiment; and

FIG. 12 is a graph showing one example when a field weakening current is set based on the voltage saturation.

DETAILED DESCRIPTION OF THE PREFERRED EMBODIMENTS

The present invention relates to an electric motor control of the electric power steering apparatus using a rotating magnetic field type electric motor (e.g., SPM (Surface Permanent Magnet) motor), and a field weakening control to weaken a field of the electric motor is performed based on a voltage saturation (or a duty ratio of ON time to 1 cycle time of a PWM control waveform) defined by a ratio of a driving voltage of the electric motor to a power supply voltage. For this reason, because a distortion in the driving current of the electric motor can be decreased by decreasing the voltage saturation (or the duty ratio), a torque ripple can be suppressed. Also, because a field weakening control is performed using the SPM motor, a predetermined torque current can be supplied to the electric motor, and the torque can be kept. Therefore, if the voltage saturation becomes high, the electric power steering apparatus can keep a stable steering assistance by performing such an electric motor control.

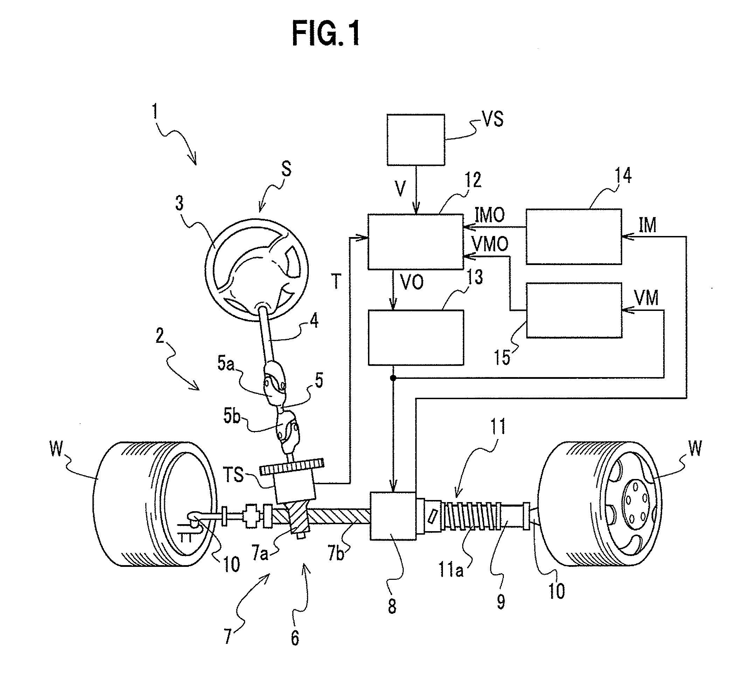

Hereinafter, referring to FIGS. 1-12, an embodiment of the present invention will be explained in detail. In addition, note that the same numerical references are used for the same components, and overlapped explanations will be omitted.

<CONSTITUTION OF ELECTRIC POWER STEERING APPARATUS>

FIG. 1 is a block diagram showing an electric power steering apparatus applied to an embodiment of the present invention. In FIG 1, an electric power steering apparatus 1 is provided with a steering system S extending from a steering wheel 3 to front wheels W, and a manual steering effort generated by a manual steering effort generating unit 2 is assisted by a torque of an electric motor 8. That is, in the electric power steering apparatus 1, an electric motor driving unit 13 generates an electric motor voltage VM based on an electric motor control signal V0 from a controller 12, and drives the electric motor 8 by the electric motor voltage VM so as to generate an auxiliary torque (an auxiliary steering effort). In addition, in this embodiment, a rotating magnetic field type three-phase brushless SPM motor is used as the electric motor 8, and is controlled by a d-q vector control.

The manual steering effort generating unit 2 is connected to a pinion 7a of a rack and pinion mechanism 7 provided in a steering gearbox 6 via a connecting shaft 5 and a steering shaft 4 integrally manufactured with the steering wheel 3, In addition, the connecting shaft 5 is provided with universal joints 5a and 5b at its both ends. Also, in the rack and pinion mechanism 7, rack teeth 7b to engage with the pinion 7a are formed around a rack shaft 9, and a rotational motion of the pinion 7a is converted to a reciprocating motion of a rack shaft 9 in a lateral direction (a vehicle width direction) by engagement between the pinion 7a and the rack teeth 7b. Further, right and left front wheels W are connected to both ends of the rack shaft 9 via tie rods 10 as steering wheels.

Also, in the electric power steering apparatus 1, the electric motor 8 is provided coaxially with the rack shaft 9 in order to generate the auxiliary steering effort (the auxiliary torque). Further, in the electric power steering apparatus 1, a rotation of the electric motor 8 is converted to a thrust via a ball screw mechanism 11 provided coaxially with the rack shaft 9, and this thrust is made to act on the rack shaft 9 (a ball screw axis 11a).

Also, the controller 12 receives detecting signals (a vehicle speed signal V, a steering torque signal T, an electric motor current signal IMO, and an electric motor voltage signal VMO) from a vehicle speed sensor VS, a steering torque sensor TS, and an electric motor current detecting unit 14 respectively. Also, the controller 12 determines a magnitude and a direction of an electric motor current IM supplied to the electric motor 8 based on these detecting signals V, T, IMO, and VMO, and outputs an electric motor control signal V0 to the electric motor driving unit 13. Further, the controller 12 judges assistance in the electric power steering apparatus 1 based on the steering torque signal T and the electric motor current signal IMO, and controls drive of the electric motor 8. In addition, the controller 12 includes a CPU (Central Processing Unit) to perform various operations and processing, etc., an input signal converting unit, a signal generator, and a memory, etc, and the CPU serves as a main controller in the electric power steering apparatus 1.

The vehicle speed sensor VS detects the vehicle speed as a number of pulses per unit time, and sends an analog signal corresponding to the detected number of pulses to the controller 12 as the vehicle speed signal V. In addition, the vehicle speed sensor VS may be a sensor dedicated to the electric power steering apparatus 1, or a vehicle speed sensor of other system.

The steering torque sensor TS provided in the steering gearbox 6 detects a magnitude and a direction of a manual steering torque generated by a driver. Also, this steering torque sensor TS sends an analog signal corresponding to the detected steering torque to the controller 12 as the steering torque signal T. In addition, the steering torque signal T contains information about a steering torque indicating a magnitude of the torque and a torque direction indicating a direction of the torque. Here, the torque direction is indicated by a +/- value of the steering torque, where + value means that the steering torque is directed to right, and - value means that the steering torque is directed to left.

For example, the electric motor current detecting unit 14 is composed of current transformers (CT) provided for every winding of the electric motor 8, and detects a magnitude and a direction of the electric motor current IM actually passing through the electric motor 8. Also, the electric motor current signal IMO corresponding to the electric motor current IM is fed back into the controller 12 (negative feedback) by the electric motor current, detecting unit 14.

The electric motor driving unit 13 applies the electric motor voltage VM to the electric motor 8 based on the electric motor control signal V0 output from the controller 12 so as to drive the electric motor 8. For example, the electric motor driving unit 13 supplies a sinusoidal current to every winding of the electric motor 8 via a pre-drive circuit (not shown) and a FET bridge (not shown) in the electric motor driving unit 13 in response to a duty of a PWM (Pulse Width Modulation) signal.

The electric motor voltage detecting unit 15 detects the electric motor voltage VM applied to the electric motor 8 by the electric motor driving unit 13, and outputs the corresponding electric motor voltage signal VMO to the controller 12.

<CONTROL SYSTEM OF ELECTRIC POWER STEERING APPARATUS>

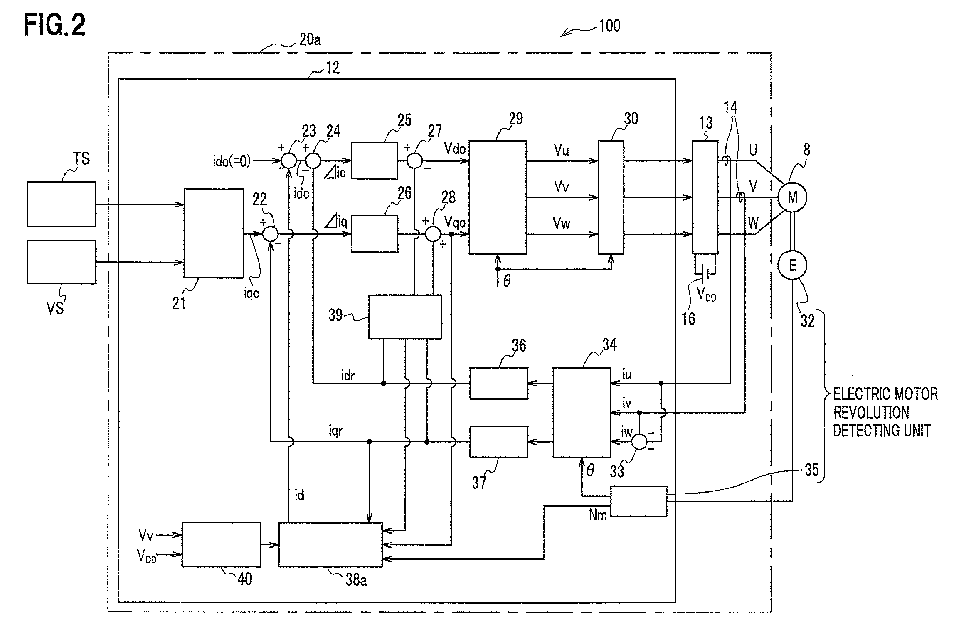

Next, a control system of the electric power steering apparatus of the embodiment according to the present invention will be explained. FIG. 2 is a block diagram showing an electric motor control system 100 of the electric power steering apparatus 1. In addition, in FIG. 2, the electric motor control system 100 is provided with the controller 12; the electric motor driving unit 13 connected to outputs of the controller 12; the electric motor 8 connected to the electric motor driving unit 13; a battery 16 for supplying direct-current power to the electric motor driving unit 13; the electric motor current detecting unit 14 for detecting the electric motor current of each phase of the electric motor 8; a VR resolver 32 for detecting a rotation angle of the electric motor 8; the steering torque sensor TS; and the vehicle speed sensor VS. In addition, an electric motor driving controller 20a is composed of the controller 12; the electric motor driving unit 13; the battery 16; and the electric motor current detecting unit 14. In addition, the controller 12 is realized by the CPU.

The controller 12 controls the electric motor 8 in response to an command torque To (not shown) based on a vector control described in a two-phase rotating coordinate system (a d-q coordinate system). That is, the steering torque signal T applied to the steering wheel 3 of the steering system S is detected by the steering torque sensor TS, and the electric motor 8 is controlled by the d-q vector control so that the assistant torque can be obtained in response to the detected steering torque signal T. As a result, the steering wheel 3 (see FIG. 1) is assisted.

First, in a q-axis target current setting unit 21, the controller 12 calculates the command torque To based on the steering torque signal T output from the steering torque sensor TS, a steering angular velocity d ø /dt, and the vehicle speed signal V output from the vehicle speed sensor VS using the following equation (1).

$$\text{To} = f\,(T,\,V,\,d\,\phi\,/dt) \qquad\qquad (1)$$

where f is a function to calculate a predetermined command torque To.

Further, the command torque To calculated by the equation (1) is converted to a q-axis current command value iqo by a torque - current converting in the q-axis target current setting unit 21.

$$\text{iqo} = g\,(\text{To}) \qquad\qquad (2)$$

On the other hand, a d-axis current command value ido is basically set at 0.

On the other hand, the electric motor current signal IMO from the electric motor current detecting unit 14 (e.g., detected current values iu, iv of each phase u, v) is detected by the current transformer (CT), and the detected current is amplified and sampled at a predetermined cycle as a detected current value. The detected current value of each phase obtained in such a way is converted in a d-q converting block 34 based on a rotation angle signal θ detected by the electric motor rotation detecting unit including a VR resolver 32 and a RD converter 35. After that, a d-axis real current idr and a q-axis real current iqr are output via attenuating units 36, 37 as feedback currents.

The attenuating units 36, 37 serve to eliminate a high-frequency noise introduced into the feedback loop from outside. That is, because the noise generated in an engine compartment is caused by ON/OFF switching of a mechanical electric switch, etc, PI control blocks 25, 26 described below is susceptible to the high-frequency noise, and the steering feeling may degenerate owing to introduction of noise. For this reason, in order to resolve such a problem, the high-frequency noise introduced into the feedback loop from the outside is eliminated by the attenuating units 36, 37.

Also, an adder 22 calculates a deviation of a q-axis current command value iqo and a q-axis feedback real current value (a q-axis real current) iqr of the torque current. Further, an adder 23 performs a below described d-axis current correction for the d-axis current command value ido (= 0), and outputs a d-axis correction current target value idc as a field weakening current value. An adder 24 calculates a deviation of a d-axis correction current target value ide after the d-axis current correction and a d-axis feedback real current value (a d-axis real current) idr. That is, in the adders 22, 24, according to the following equations (3) and (4), a d-axis current deviation Aid and a q-axis current deviation $\Delta$iq are calculated.

$$\Delta id = idc - idr \qquad (3)$$

$$\Delta iq = iqo - iqr \qquad (4)$$

Next, P (Proportional) control and I (Integral) control are performed on the d-axis current deviation $\Delta$id and the q-axis current deviation $\Delta$iq in PI control blocks 25, 26. As a result, a d-axis command voltage Vdo and a q-axis command voltage Vqo are obtained. Next, in a d-q inverting block 29, a d-q inverting is performed on these command voltages Vdo and Vqo so as to obtain command voltages Vu, Vv, Vw corresponding to U, V, W phases of the electric motor 8 respectively. These command voltages Vu, Vv, Vw are converted to PWM duty signals in a PWM converter 30, and these PWM duty signals are supplied to phase windings of the electric motor 8 (a brushless motor) respectively as sinusoidal currents via the pre-drive circuit (not shown) and the FET bridge (not shown) in the electric motor driving unit 13 in order to perform a d-q vector control.

By the way, in a correcting processing (a field weakening processing) of the d-axis current of this embodiment, a d-axis correction current setting unit 38a determines the d-axis correction current id, and the adder 23 calculates the d-axis correction current target value idc according to the following equation (5).

$$idc = ido + id \qquad (5)$$

Here, id is a d-axis correction current from the d-axis correction current setting unit 38a. In this embodiment, the d-axis current command value ido = 0. Therefore, by supplying the d-axis correction current target value idc (i.e., the d-axis current) based on the d-axis correction current id (negative value), the field weakening current passes through the electric motor 8, and the field is weakened in the electric motor 8. As a result, a rotational speed Nm of the electric motor 8 can be increased. In other words, because a counter electromotive force in a stator coil is increased when the rotational speed Nm of the electric motor 8 is increased, the rotational speed Nm does not increase beyond a predetermined value if the driving current of the electric motor 8 is increased. For this reason, by supplying the field weakening current (the d-axis current) to the electric motor 8, the field of a magnet of a rotor is weakened, the counter electromotive force generated in the stator coil is decreased, and the rotational speed Nm of the electric motor 8 can be increased.

In addition, when there are mutual interferences among a plurality of control inputs and a plurality of controlled variables, a decoupling controller 39 and the adders 27, 28 connected thereto in FIG. 2 serve to interrupt the mutual interferences so that one control input affects only one controlled variable. In the case of a permanent-magnet synchronous motor, because there are motional electromotive forces interfering each other between the i-axis and the q-axis, the decoupling controller 39 is used to reduce the feedback loop (i.e., to reduce response time of the feedback loop) of an angular velocity ω of the electric motor 8, and the iqr and idr of the electric motor current.

Here, the field weakening control processing performed by the d-axis correction current setting unit 38a will be explained. The q-axis command voltage Vqo, the q-axis real current iqr, and the rotational speed Nm of the electric motor 8 are fed back by d-axis correction current setting unit 38a so as to generate the d-axis correction current id, and this d-axis correction current id is input to the adder 23. For this reason, the adder 23 can output the d-axis current deviation Aid which is the deviation of the d-axis correction current target value idc and the d-axis correction current id (the d-axis feedback real current value idr).

In addition, according to a q-axis command voltage corresponding map, the d-axis correction current setting unit 38a supplies the d-axis correction current id only when the q-axis command voltage Vqo is large (i.e., the q-axis current deviation $\Delta$iq is large), decreases the field of the electric motor 8, and increases the rotational speed Nm of the electric motor 8. For this reason, when the steering wheel 3 is turned slow and small at the time of traveling, etc, the field weakening current is prevented from passing through the electric motor 8, and the useless current is suppressed.

Also, according to a q-axis real current corresponding map, the d-axis correction current setting unit 38a supplies the d-axis correction current id only when the q-axis real current iqr is small, decreases the field of the electric motor 8, and increases the rotational speed Nm of the electric motor 8. For this reason, in the case where the rotational speed Nm can not be increased anymore, when attempting to do steering operation faster, the torque of the electric motor 8 is increased, and a motion of the steering wheel can be lighted.

Further, according to the rotational speed corresponding map, the d-axis correction current setting unit 38a prevents the d-axis correction current id from flowing when the rotational speed Nm of the electric motor 8 is slow For this reason, because the field weakening current is prevented from passing through the electric motor 8 when the steering wheel 3 is turned slow, the useless current is suppressed.

In this way, each component which performs the d-axis current correction by the d-axis correction current setting unit 38a operates independently. Also, each component can perform the field weakening control by making the d-axis correction current id flow respectively when the q-axis command voltage Vqo calculated based on the q-axis current deviation $\Delta$iq is high, when the q-axis real current iqr is small, and when the electric motor rotational speed Nm is fast.

<FIELD WEAKENING CONTROL BASED ON VOLTAGE SATURATION

Next, the field weakening control of the electric motor 8 performed by the electric power steering apparatus based on the voltage saturation (or the duty ratio) will be explained. That is, the controller 12 of this embodiment is further provided with a voltage saturation calculating unit 40 for detecting the voltage saturation of the electric motor 8, and the voltage saturation calculating unit 40 sends information about the voltage saturation of the electric motor 8 to the d-axis correction current setting unit 38a. In addition, the voltage saturation of the electric motor 8 is defined by a ratio of the driving voltage of the electric motor 8 to a power supply voltage (i.e., a battery voltage) $V_{DD}$ of the electric motor driving controller 20a. Also, the d-axis correction current setting unit 38a serves as the field weakening current setting unit for setting the d-axis current (the field weakening current) id based on the input voltage saturation (or the duty ratio).

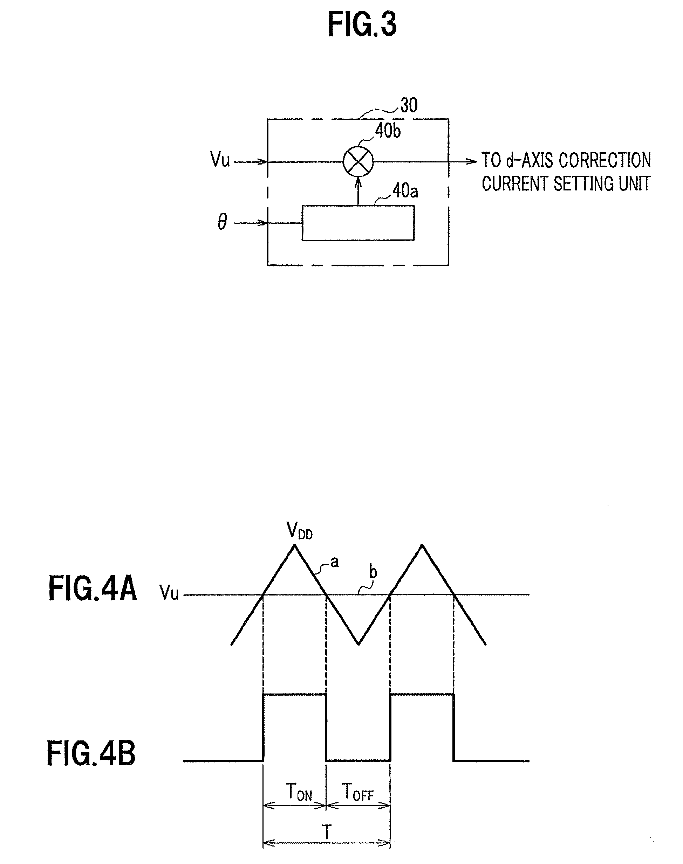

Next, in order to explain that the voltage saturation is equivalent to the duty ratio, the PWM converter 30 will be explained. FIG. 3 is a block diagram showing an internal constitution of the PWM converter 30, and FIG 4 is a wave form chart of a main part of the PWM converter 30. As shown in FIG 3, the PWM converter 30 is provided with a triangular waveform generator 40a which receives a rotation angle signal $\theta$ of the electric motor 8 and generates a triangular waveform, and a comparator 40b which compares a triangular waveform voltage (see FIG. 4A) generated by the triangular waveform generator 40a and a driving voltage Vu (see FIG. 4B) output from the d-q inverting block 29 in order to generate a duty waveform. The duty waveform is output to the d-axis correction current setting unit 38a.

That is, as shown in FIG. 4A, the comparator 40b compares a triangular waveform voltage (a) generated by the triangular waveform generator 40a and a driving voltage command value Vu (b) output from the d-q inverting block 29. Here, a peak value of the triangular waveform voltage (a) is power supply voltage $V_{DD}$. Also, as shown in FIG. 4B, the comparator 40b generates a duty waveform composed of an ON time ($T_{ON}$) during which the triangular waveform voltage (a) is higher than the driving voltage command value Vu (b) and an OFF time ($T_{OFF}$) during which the triangular waveform (a) is lower than the driving voltage command value Vu (b), and sends the duty waveform to the electric motor driving unit 13 as the electric motor control signal V0 (see FIG 2).

Also, the electric motor driving unit 13 (see FIG. 2) converts the electric motor control signal V0 to the duty waveform whose peak value is the power supply voltage $V_{DD}$ using the pre-drive circuit and the FET bridge, and applies the converted voltage to the electric motor 8. The driving voltage which is a mean value of the voltage waveform applied to the electric motor 8 is equal to a value obtained by multiplying the power supply voltage $V_{DD}$ by a ratio of the ON time $T_{ON}$ to 1 cycle time T (= $T_{ON}$ + $T_{OPP}$) (i.e., the duty ratio ($T_{ON}$/T)). Therefore, the voltage saturation defined by the ratio of the driving voltage of the electric motor to the power supply voltage is equivalent to the duty ratio. Therefore, d-axis correction current setting unit 38a can set the d-taxis correction current based on the duty ratio received from the voltage saturation calculating unit 40.

In addition, the voltage saturation calculating unit 40 can obtain the voltage saturation by calculating the driving voltage from the power supply voltage $V_{DD}$ and the driving voltage command value, not calculating the duty ratio. Hereinafter, equations based on which the voltage saturation calculating unit 40 obtains the voltage saturation by calculating the driving voltage will be explained. First, based on a voltage equation of the vector control, the driving voltage of the electric motor (i.e., a line voltage effective value in steady state) V will be calculated according to the following a basic voltage equation (6) and a driving voltage equation (7).

$$\begin{pmatrix} Vd \\ Vq \end{pmatrix} = \begin{pmatrix} Ra + PLd & -\omega Lq \\ \omega Ld & Ra + PLq \end{pmatrix} \begin{pmatrix} Id \\ Iq \end{pmatrix} + \begin{pmatrix} 0 \\ \omega \phi a \end{pmatrix} \quad (6)$$

$$V = \sqrt{Vd^2 + Va^2} \quad (7)$$

where Vd and Vq are a d-axis voltage and a q-axis voltage (V), Id and Iq are a d-axis current and a q-axis current (A), Ra is a stator winding resistor value ($\Omega$), Ld and Lq are a d-axis inductance and a q-axis inductance (H), $\omega$ is an electric angular velocity (rad/s), $\phi$ a is an electromotive voltage constant (V/(rad/s)), V is a driving voltage (V), and P is a differential operator.

Next, the power supply voltage $V_{DD}$ of the electric motor driving controller 20a is detected by a power supply voltage detecting unit, and is converted to the line voltage effective value. Also, based on the driving voltage V calculated by the equation (7) and the power supply voltage $V_{DD}$ detected by the power supply voltage detecting unit, the voltage saturation can be calculated has follows: voltage saturation = driving voltage V / power supply voltage $V_{DD}$.

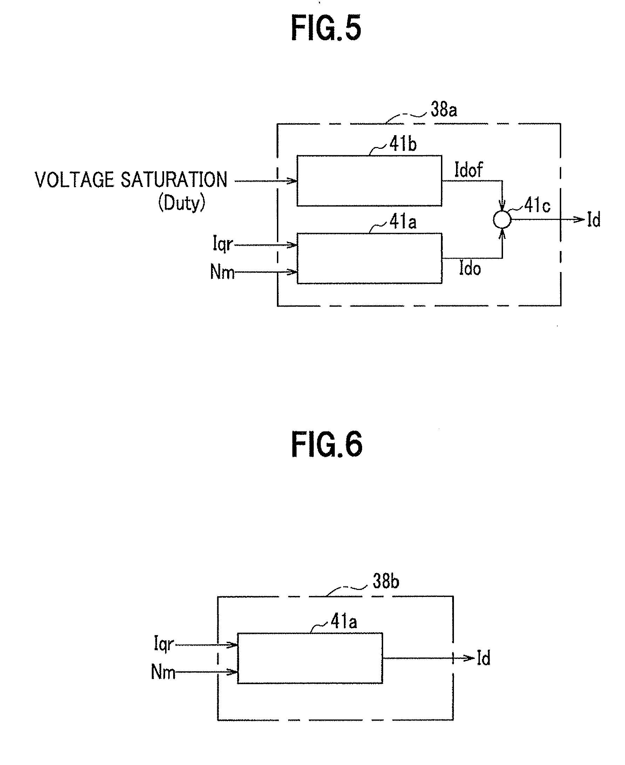

FIG. 5 is a block diagram showing an internal constitution of the d-taxis correction current setting unit 38a shown in FIG. 2. As shown in FIG 5, as the field weakening current setting unit, the d-axis correction current setting unit 38a is provided with a d-axis target current calculating unit 41a for calculating a d-axis target current Ido based on the q-axis real current iqr and the rotational speed Nm of the electric motor 8; a d-axis offset current calculating unit 41b for calculating a d-axis offset current Idof which indicates an offset value of the d-axis correction current Id based on the voltage saturation (the duty ratio) input from the voltage saturation calculating unit 40; and an adder 41c for adding the d-axis target current Ido output from the d-axis target current calculating unit 41a to the d-axis offset current Idof output from a d-axis offset current calculating unit 38b.

On the other hand, in the technique disclosed in JP 2004-040883 A, the d-axis correction current setting unit 38a shown in FIG. 2 is changed to the d-axis correction current setting unit 38b. As shown in FIG. 6, without performing correction using the offset value Idof of the field weakening current based on the saturation of the driving voltage, the d-axis correction current setting unit 38b outputs the d-axis correction current Id using only the d-axis target current calculated by the d-axis target current calculating unit 38a based on the q-axis real current iq and the rotational speed Nm of the electric motor. For this reason, in the technique disclosed in JP 2004-040883 A, there is no room for the driving voltage in a region in which the voltage saturation (or the duty ratio) is high, distortion occurs in the driving current, and the torque ripple is generated.

Next, compared with the technique disclosed in JP 2008-079387 A, the method for performing the field weakening control of the electric motor 8 based on the voltage saturation (or the duty ratio) using the constitution of the d-axis correction current setting unit 38a shown in FIG. 5 will be explained in detail.

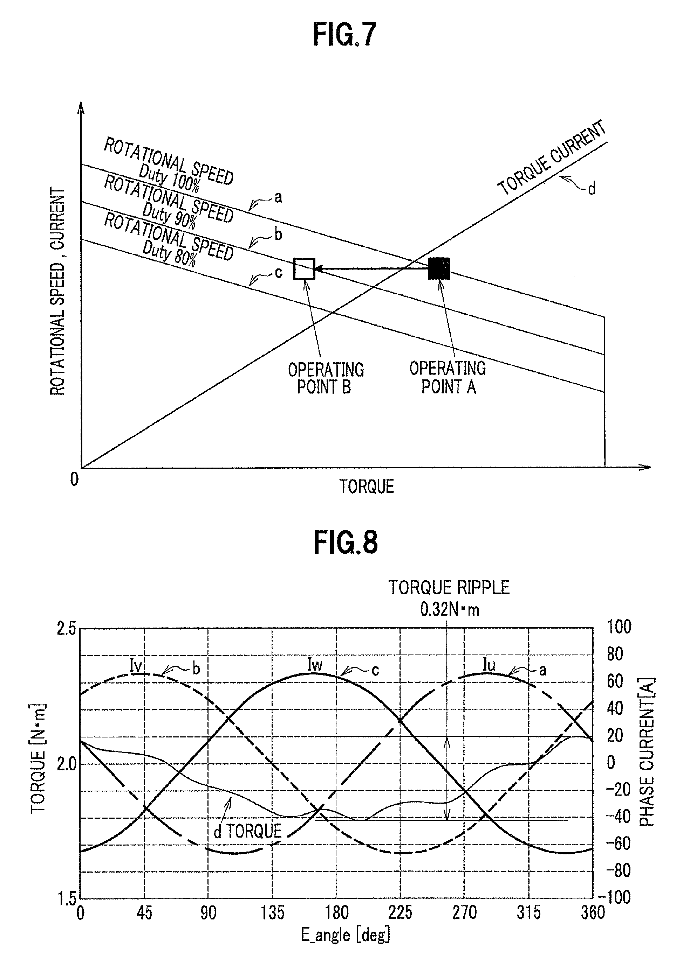

FIG. 7 is a graph showing output characteristics of an electric motor described in JP 2008-079387 A for different voltage saturations of the electric motor. The horizontal axis indicates the torque, and the vertical axis indicates the rotational speed and the torque current. In addition, each characteristics a, b, c shown in the graph of FIG. 7 indicates the relationship between the torque and the rotational speed for each voltage saturation (each duty ratio) respectively, and a characteristic d indicates the relationship between the torque and the torque current. Also, FIG. 8 is a graph showing the relationship between the driving current of the electric motor and the torque ripple for different voltage saturations (duty ratios) based on the characteristics shown in FIG. 7. The horizontal axis indicates the electric angle (deg), the left vertical axis indicates the torque (Nm), and the right vertical axis indicates the phase current (A). In addition, each characteristics a, b, c shown in the graph of FIG. 7 indicates U, V, W phases of phase currents IU, IV, IW of the electric motor respectively, and the characteristic d indicates the torque of the electric motor.

As shown in FIG. 7, output characteristics of the torque and the rotational speed of the electric motor generally change as indicated by characteristic curves a, b, c shown in FIG. 7 in response to the voltage saturation (the duty ratio). That is, the value of the characteristic curve a at the time when the duty ratio is 100% is highest, and the duty ratio decreases such as 90% (the characteristic curve b) and 80% (the characteristic curve c), the value of the characteristic curve proportionally decreases. On the other hand, with respect to the relationship between the torque and the torque current, as indicated by the characteristic d of FIG. 7, as the torque current increases, the torque proportionally increases independent of the duty ratio.

Here, as indicated by an operating point A of the characteristic a shown in FIG. 7, when the driving voltage of the electric motor 8 becomes equal to the power supply voltage (the battery voltage $V_{DD}$) and the electric motor 8 is driven by a predetermined torque current on condition that the driving voltage is saturated (the duty ratio = 100%), there is no room for the driving voltage, the peak value the driving current (the phase current for each phase) of the electric motor 8 is decreased as indicated by characteristics a, b, c, of FIG. 8, and a distortion component (a harmonics component) occurs. As a result, as indicated by the characteristic d of FIG. 8, a large torque ripple occurs in the torque of the electric motor 8 owing to the distortion in the phase current for each phase. For example, in an example of the characteristic d shown in FIG 8, a large torque ripple whose magnitude is about 0.32 Nm occurs in the torque of electric motor 8. In this way, when a large torque ripple occurs in the electric motor 8, an unusual noise occurs in the electric motor 8, the steering feeling becomes worse, and salability as the electric power steering apparatus is damaged.

For this reason, because the torque current is limited on condition that the driving voltage is saturated (the duty ratio = 100%) when the current command limit value of the electric motor 8 is corrected based on the voltage saturation (or the duty ratio) so as to suppress the saturation of the driving voltage, the operating point A of the characteristic whose duty ratio is 100% is shifted to an operating point B of the characteristic b whose duty ratio is 90%. That is, with respect to the operating point B, because the voltage saturation (the duty ratio) is decreased to 90%, the distortion in each phase current of the electric motor 8 is decreased. As a result, the degradation in the torque ripple of the electric motor 8 can be suppressed. However, with decrease in the duty ratio, the torque current of the electric motor 8 is limited, and the torque is limited, too. For this reason, the steering operation of the electric power steering apparatus becomes heavy, and the light steering feeling can not be obtained.

Therefore, in this embodiment, by supplying the field weakening current to the electric motor 8 at the operating point A whose driving voltage is saturated (the duty ratio = 100%), the duty ratio is decreased, and a constant torque current is supplied to the electric motor 8. For this reason, for the electric motor 8, the torque ripple can be suppressed while keeping a predetermined torque. By performing such electric motor control, if the voltage saturation (or the duty ratio) becomes high, the electric power steering apparatus can keep a stable steering assistance.

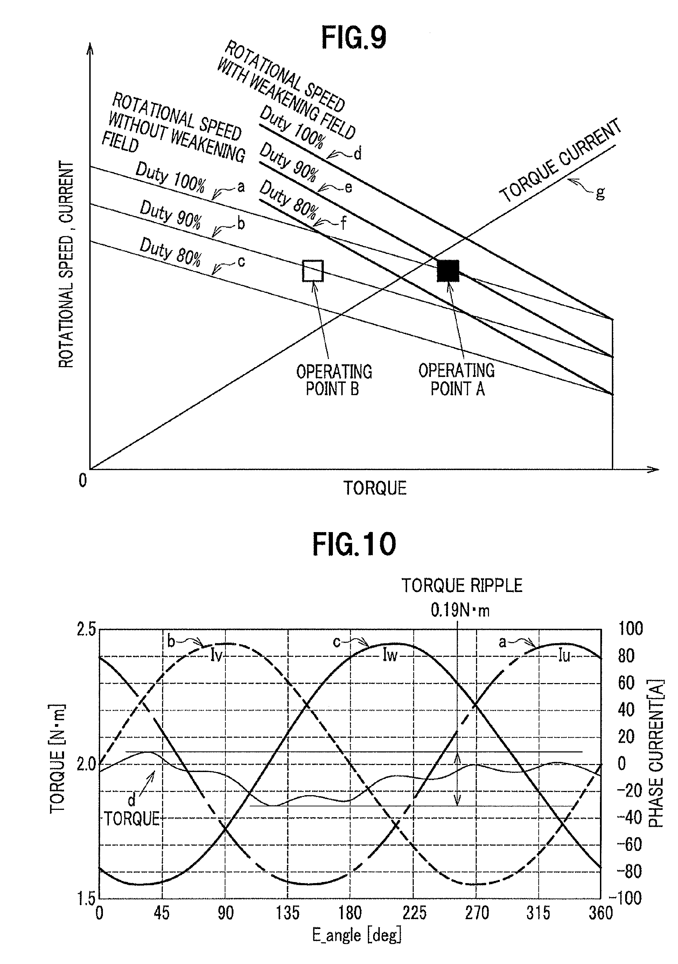

Hereinafter, referring to FIGS. 1-12, a method for suppressing the torque ripple by supplying the field weakening current to the electric motor in response to the voltage saturation (or the duty ratio) will be explained in detail. FIG. 9 is a graph showing output characteristics of the electric motor 8 of this embodiment for different voltage saturations (duty ratios) of the electric motor. The horizontal axis indicates the torque, and the vertical axis indicates the rotational speed and the torque current. In addition, each characteristics a, b, c shown in the graph of FIG. 9 indicates the relationship between the torque and the rotational speed for each voltage saturation (each duty ratio) without the field weakening control respectively, each characteristics d, e, f indicates the relationship between the torque and the rotational speed for each voltage saturation (each duty ratio) with the field weakening control respectively, and a characteristic g indicates the relationship between the torque and the torque current.

Also, FIG. 10 is a graph showing the relationship between the driving current of the electric motor and the torque ripple for different voltage saturations (duty ratios) based on the characteristics with the field weakening control shown in FIG. 9. The horizontal axis indicates the electric angle (deg), the left vertical axis indicates the torque (Nm), and the right vertical axis indicates the phase current (A). In addiction, each characteristics a, b, c shown in the graph of FIG. 9 indicates phase currents IU, IV, IW of U, V, W phases of the electric motor 8 respectively, and the characteristic d indicates the torque of the electric motor 8.

That is, in FIG. 9, if the field weakening current is supplied at the operating point A on condition that the driving voltage is saturated (i.e., the duty ratio is 100%), because a magnetic flux of a permanent-magnet which serves as a rotor is weakened, the rotational speed of the electric motor 8 is increased. For this reason, the characteristic a of the torque - rotational speed on condition that the duty ratio is 100% is like the characteristic d. Likewise, the characteristic b of the torque - rotational speed on condition that the duty ratio is 90% becomes like the characteristic e, and the characteristic c of the torque - rotational speed on condition that the duty ratio is 80% becomes like the characteristic f.

In this way, because the rotational speed of the electric motor is increased by supplying the field weakening current, the voltage saturation (the duty ratio) can be decreased to 90% (the characteristic curve e) by decreasing the driving voltage while keeping the operating point A of the torque - rotational speed characteristic (the characteristic curve a) on condition that the duty ratio is 100% (i.e., while keeping a predetermined rotational speed and the torque). In other words, by supplying the field weakening current, the rotational speed of the electric motor 8 is increased, and the driving voltage is decreased. For this reason, the operating point A of the torque - rotational speed characteristic (the characteristic curve a) on condition that the duty ratio is 100% is not shifted to the operating point B, and is kept as the operating point A of the torque - rotational speed characteristic (the characteristic curve e) on condition that the duty ratio is 90%.

As a result, there is room for the driving voltage of the electric motor 8 by reduction in the voltage saturation (the duty ratio), peak values of the phase currents IU, IV, IW of the U, V, W phases of the electric motor 8 do not decrease as indicated by the characteristics a, b, c in FIG. 10, and the distortion in the driving current can be decreased. Therefore, as indicated by the characteristic d shown in FIG. 10, the degradation in the torque ripple of the electric motor 8 can be suppressed. In a example of the characteristic d shown in FIG 10, a small torque ripple occurring in the torque of the electric motor 8 is limited about 0.19 Nm.

That is, in this embodiment, if there is room for the driving voltage by supplying the field weakening current in order to decrease the duty ratio from 100% to 90%, the torque current is not decreased. Therefore, the operating point A of the torque - rotational speed of the electric motor 8 is kept as it is. For this reason, if the duty ratio is decreased from 100% to 90%, the torque of the electric motor 8 is not limited. Therefore, the steering operation does not become heavy. In this way, the electric power steering apparatus can achieve the light steering feeling by keeping the predetermined torque while decreasing the torque ripple of the electric motor 8.

Turning to the explanation for the controller 12 shown in FIG. 2, the voltage saturation calculating unit 40 outputs a duty ratio ($T_{ON}$/T) of ON time $T_{ON}$ to 1 cycle time T of the duty waveform (i.e., the voltage saturation) from the comparator 40b to the d-axis correction current setting unit 38a.

For this reason, the d-axis correction current setting unit 38a corrects the d-axis target current Ido based on the duty ratio (the voltage saturation) output from the voltage saturation calculating unit 40. As a result, the controller 12 performs the field weakening control of the electric motor 8 based on the corrected d-axis correction current Id, and the predetermined torque of the electric motor 8 can be kept while suppressing the torque ripple.

More specifically, the d-axis correction current setting unit 38a calculates a d-axis target current Ido using the internal constitution shown in FIG. 5, and outputs the d-axis target current Ido to an adder 38c. On the other hand, the d-axis offset current calculating unit 38b outputs the d-axis offset current Idof, which indicates an offset value of the d-axis correction current Id calculated based on the voltage saturation (or the duty ratio) output from the voltage saturation calculating unit 40, to an adder 38c. For this reason, the adder 38 can output the d-axis correction current Id, which is obtained by adding the d-axis offset current Idof to the d-axis target current, Ido, to the adder 23 (see FIG. 2). As a result, as described above, the controller 12 can perform the field weakening control of the electric motor 8 based on the corrected d-axis correction current Id. For this reason, the rotational speed of the electric motor 8 can be increased. As a result, for the electric motor 8, the torque ripple can be suppressed by decreasing the voltage saturation (or the duty ratio) while keeping the predetermined torque.

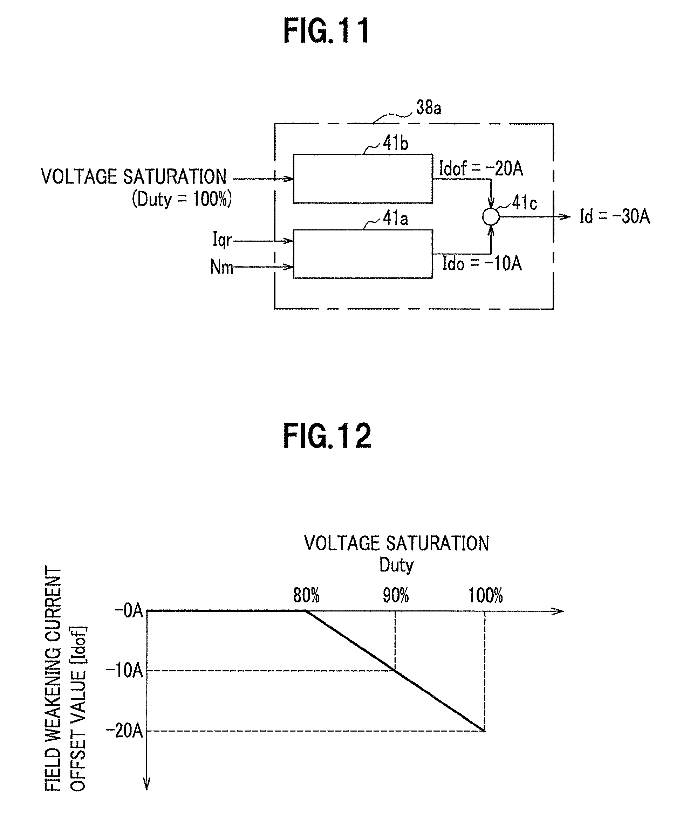

FIG. 11 is a block diagram showing a concrete example of the d-axis correction current by a field weakening current setting function of the d-axis correction current setting unit 38a shown in FIG. 5. That is, as shown in FIG. 11, the d-axis target current calculating unit 41a outputs the d-axis target current Ido of -10A. On the other hand, the d-axis offset current calculating unit 41b outputs the d-axis offset current Idof of -20A. The adder 41c adds the d-axis target current Ido to the d-axis offset current Idof. For this reason, because the adder 41c outputs the d-axis correction current Id of -30A, the controller 12 performs the field weakening control of the electric motor 8 based on the corrected d-axis correction current Id of -30A, not the d-axis target current Ido of -10A.

In addition, although the voltage saturation calculating unit 40 calculates the voltage saturation based on a PWM driving duty ratio (power source ON time / power source ON and OFF time (1 cycle time)) driven by the PWM converter 30 in the above example, other calculating method may be used. For example, using a current detecting unit, a rotational speed detecting unit, of a power supply voltage detecting unit, etc, (driving voltage) / (power supply voltage) may be calculated as the duty ratio.

Next, a method of this embodiment for setting the field weakening current (the d-axis current) Id in consideration of the voltage saturation will be explained. In this embodiment, the nearer to a saturated state the driving voltage of the electric motor 8 is, the larger the field weakening current (the d-axis current) Id is supplied. FIG. 12 is a graph showing one example when the field weakening current is set based on the voltage saturation. The horizontal axis indicates the voltage saturation (the duty ratio), and the vertical axis indicates the offset value Idof of the field weakening current.

As shown in FIG 12, in response to the magnitude of the voltage saturation (the duty ratio), an offset value of the field weakening current is set. That is, the offset value of the field weakening current is set so that the field weakening current is not offset when the voltage saturation (the duty ratio) is less than 80%, and so that the field weakening current is gradually increased when the voltage saturation (the duty ratio) is equal to or more than 80%. Also, when the voltage saturation (the duty ratio) is 90%, the offset value of the field weakening current is -10A, and when the voltage saturation (the duty ratio) is 100%, the offset value of the field weakening current is -20A. As described above, the higher the voltage saturation (the duty ratio) is (i.e., 90%, 100%), the more the field weakening current flows.

That is, as shown in FIG. 11, in the case where the voltage saturation (the duty ratio) is 100% when the target value of the field weakening current calculated and output by the d-axis target current calculating unit 41a is -10A, the offset value (-20A) of the field weakening current is added according to the graph shown in FIG. 12, and drive of the electric motor 8 is finally controlled with the corrected field weakening current target value of -30A.

In this way, by setting the field weakening current offset value Idof as the graph shown in FIG. 12, the higher the voltage saturation (the duty ratio) becomes, the stronger the field weakening becomes. Therefore, the magnetic flux of the permanent-magnet is weakened, the rotational speed of the electric motor 8 is increased. As a result, the voltage saturation (the duty ratio) can be decreased. In this way, by decreasing the voltage saturation (the duty ratio), the room for the driving voltage is secured, the distortion in the driving current is decreased, and the torque, ripple of the electric motor 8 is suppressed. In addition, in the control of the field weakening current (the d-axis current) according to this embodiment, the torque current (the q-axis current) which is the driving current of the electric motor 8 is not limited. Therefore, the torque of the electric motor 8 is not decreased. For this reason, the steering operation of the electric power steering apparatus 1 does not become heavy, and the smooth and light steering feeling can be secured.

In addition, because the power supply voltage (the battery voltage $V_{DD}$) of the electric power steering apparatus fluctuates in a range from about 10V to about 16V depending on usage of vehicle-mounted electric components such as a headlight, and an air condenser, etc., the output characteristics (the torque - rotational speed characteristic) of the electric motor 8 varies. However, in the electric power steering apparatus 1 according to this embodiment, the field weakening current is set based on the saturation (the duty ratio [%]) of the driving voltage not the power supply voltage ($V_{DD}$). Therefore, if the output characteristics (the torque - rotational speed characteristic) of the electric motor 8 varies owing to fluctuation in the power supply voltage, it is possible to cope with the field weakening control according to this embodiment.

Also, in the electric power steering apparatus of this embodiment, the voltage saturation calculating unit 40 and the d-axis correction current setting unit 38a are provided in order to correct the d-axis current of the electric motor 8 so that the field of the electric motor 8 is weakened when the q-axis command voltage is large, when the q-axis real current is small, and when the rotational speed of the electric motor 8 is fast. Therefore, the rotational speed of the electric motor 8 can be increased without increasing a rated current of the electric motor 8. For this reason, even if the command torque varies sharply, a responsivity of the electric motor 8 is improved, and an optimal auxiliary steering effort can be given to the steering system S. Therefore, it is possible to achieve the electric power steering apparatus 1 which obtains the smooth steering feeling without reduction in fuel efficiency and upsizing of the electric motor 8.

In addition, as will be appreciated from the foregoing, the steering torque sensor TS of this embodiment corresponds to a steering input detecting unit in claims, and the q-axis target current setting unit 21 of this embodiment corresponds to a torque current setting unit in claims. Further, the d-axis correction current setting unit 38a of this embodiment corresponds to a field weakening current setting unit in claims, the electric motor driving controller 20a of this embodiment corresponds to an electric motor driving controller in claims, and the voltage saturation calculating unit 40 of this embodiment corresponds to a voltage saturation calculating unit in claims. Still further, the d-axis correction current setting unit 38a is realized by the d-axis target current calculating unit 41a, the d-axis offset current calculating unit 41b, and the adder 41c, and the voltage saturation calculating unit 40 is realized by the triangular waveform generator 40a and the comparator 40b.

<SUMMARY>

As described above, the electric power steering apparatus 1 according to this embodiment can achieve the light steering feeling by performing the field weakening control based on the voltage saturation (or the duty ratio) while suppressing the torque ripple of the electric motor 8 caused by saturation of the driving voltage. That is, the voltage saturation (of the duty ratio) can be decreased by supplying the large field weakening current when the voltage saturation (or the duty ratio) is high. Therefore, the degradation in the torque ripple of the electric motor 8 can be suppressed. Also, because the torque current does not vary, the steering assistance can be kept using the stable torque.

Also, the electric power steering apparatus according to the embodiment of the present invention can perform the field weakening control so that the voltage saturation (or the duty ratio) is equal to or less than a predetermined value (e.g., 90%) at any time. Further, the stable steering assistance can be kept while suppressing the degradation in the torque ripple of the electric motor at any value of the voltage saturation (or the duty ratio) by performing the field weakening control strongly as the voltage saturation (or the duty ratio) approaches the upper limit (e.g., 100%).

While the described embodiment represents the preferred from the present invention, it is to be understood that modifications will occur to those skilled in this art without aparting from the spirit of the invention. For example, although the offset value of the field weakening current is gradually increased when the voltage saturation (the duty ratio) is equal to or more than 80% in this embodiment, the present invention is not limited to the embodiment. The offset value of the field weakening current may be gradually increased when the voltage saturation (the duty ratio) is in a range from 0% to 100%. In this way, the torque ripple can be suppressed to detail, and more comfortable steering feeling can be obtained.

A q-axis target current setting unit generates a q-axis current command value based on a steering input signal from a steering torque sensor and a vehicle speed signal from a vehicle speed sensor. An electric motor generates a predetermined torque based on the q-axis current command value and a q-axis current (a torque current) to which a fed back q-axis real current is added. On the other hand, a d-axis correction current setting unit sets a field weakening current (a d-axis current) in response to a voltage saturation (duty ratio = driving voltage of electric motor / power supply voltage) output from a voltage saturation calculating unit. For this reason, when the voltage saturation becomes high, distortion (harmonics component) in current can be decreased by decreasing the voltage saturation while keeping the torque constant using a predetermined torque current, and a torque ripple can be suppressed.

**Claims**

1. An electric power steering apparatus for controlling drive of an electric motor for assisting a steering in response to a driver's steering input, comprising:

a steering input detecting unit for detecting a magnitude of the steering input;
a torque current setting unit for setting a torque current of the electric motor based on a signal from the steering input detecting unit;
a field weakening current setting unit for setting a field weakening current to weaken a field of the electric motor;
an electric motor driving controller for controlling drive of the electric motor based on the torque current set by the torque current setting unit and the field weakening current set by the field weakening current setting unit; and
a voltage saturation calculating unit for calculating a voltage saturation of the electric motor defined by a ratio of a driving voltage of the electric motor to a power supply voltage of the electric motor driving controller,
wherein the field weakening current setting unit sets the field weakening current in response to the voltage saturation calculated by the voltage saturation calculating unit.

2. The electric power steering apparatus according to claim 1, wherein the field weakening current setting unit sets the field weakening current so that a value of the voltage saturation calculated by the voltage saturation calculating unit becomes equal to or less than a predetermined value.

3. The electric power steering apparatus according to claim 1 or 2, wherein the nearer to an upper limit the voltage saturation calculated by the voltage saturation calculating unit is, the larger absolute value of the field weakening current the field weakening current setting unit sets.

4. An electric motor controller used for an electric power steering apparatus for controlling drive of an electric motor for assisting a steering in response to a driver's steering input, comprising:

a steering input detecting unit for detecting a magnitude of the steering input;
a torque current setting unit for setting a torque current of the electric motor based on a signal from the steering input detecting unit;
a field weakening current setting unit for setting a field weakening current to weaken a field of the electric motor;
an electric motor driving controller for controlling drive of the electric motor based on the torque current set by the torque current setting unit and the field weakening current set by the field weakening current setting unit; and
a voltage saturation calculating unit for calculating a voltage saturation of the electric motor defined by a ratio of a driving voltage of the electric motor to a power supply voltage of the electric motor driving controller,
wherein the field weakening current setting unit sets the field weakening current in response to the voltage saturation calculated by the voltage saturation calculating unit.

# FIG.1

# FIG.2

EP 2 366 603 A1

# FIG.3

Vu →                         30
                           40b

                    TO d-AXIS CORRECTION
                    CURRENT SETTING UNIT

                           40a

θ →

$V_{DD}$

FIG.4A   Vu — — — — — — — a   b

FIG.4B

$T_{ON}$ | $T_{OFF}$

T

# FIG.5

38a

41b

VOLTAGE SATURATION (Duty) → [41b] → Idof

41a

Iqr → [41a]
Nm → Ido

41c → Id

# FIG.6

38b

41a

Iqr → [41a] → Id
Nm →

# FIG.7

# FIG.8

# FIG.9

ROTATIONAL SPEED WITH WEAKENING FIELD

ROTATIONAL SPEED WITHOUT WEAKENING FIELD

Duty 100% ⟋a
Duty 90% ⟋b
Duty 80% ⟋c

Duty 100% ⟋d
Duty 90% ⟋e
Duty 80% ⟋f

TORQUE CURRENT ⟋g

ROTATIONAL SPEED , CURRENT

OPERATING POINT B

OPERATING POINT A

0   TORQUE

# FIG.10

TORQUE RIPPLE 0.19N·m

TORQUE [N·m]

PHASE CURRENT[A]

E_angle [deg]

# FIG.11

VOLTAGE SATURATION
(Duty = 100%) → 41b → Idof = −20A

Iqr → 41a
Nm → → Ido = −10A

41c → Id = −30A

38a

# FIG.12

VOLTAGE SATURATION
Duty

FIELD WEAKENING CURRENT
OFFSET VALUE [Idof]

−0A
−10A
−20A

80%  90%  100%

Europäisches
Patentamt

European
Patent Office

Office européen
des brevets

**EUROPEAN SEARCH REPORT**

Application Number

EP 11 15 8489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 903 671 A2 (NSK LTD [JP]) 26 March 2008 (2008-03-26) * the whole document * | 1 | INV. B62D5/04 H02P21/06 |
| A,D | & JP 2008 079387 A (NSK LTD) 3 April 2008 (2008-04-03) * abstract * | 1 | |
| A,D | JP 2004 040883 A (HONDA MOTOR CO LTD) 5 February 2004 (2004-02-05) * abstract * | 1 | |
| A | JP 2006 129632 A (MATSUSHITA ELECTRIC IND CO LTD) 18 May 2006 (2006-05-18) * abstract * | 1 | |
| A | US 6 329 781 B1 (MATSUI HIROKAZU [JP] ET AL) 11 December 2001 (2001-12-11) * abstract * | 1 | |
| A | WO 2008/152929 A1 (YASKAWA DENKI SEISAKUSHO KK [JP]; MORIMOTO SHINYA; TAKAKI MAMORU) 18 December 2008 (2008-12-18) * abstract * | 1 | TECHNICAL FIELDS SEARCHED (IPC) B62D H02P |
| A | WO 2009/063786 A1 (YASKAWA DENKI SEISAKUSHO KK [JP]; MORIMOTO SHINYA; TAKAKI MAMORU) 22 May 2009 (2009-05-22) * abstract * | 1 | |
| A | JP 2008 160912 A (IHI CORP) 10 July 2008 (2008-07-10) * abstract * | 1 | |
| A | US 5 877 603 A (UCHIDA HIROYUKI [JP] ET AL) 2 March 1999 (1999-03-02) * abstract * | 1 | |

-/--

The present search report has been drawn up for all claims

| Place of search | Date of completion of the search | Examiner |
|---|---|---|
| The Hague | 14 July 2011 | Pemberton, Paul |

EPO FORM 1503 03.82 (P04C01)

Europäisches
Patentamt

European
Patent Office

Office européen
des brevets

## EUROPEAN SEARCH REPORT

Application Number

EP 11 15 8489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2006 141095 A (TOYOTA IND CORP; TOYOTA CENTRAL RES & DEV) 1 June 2006 (2006-06-01) * abstract *<br>----- | 1 | |

TECHNICAL FIELDS
SEARCHED     (IPC)

The present search report has been drawn up for all claims

| Place of search | Date of completion of the search | Examiner |
|---|---|---|
| The Hague | 14 July 2011 | Pemberton, Paul |

EPO FORM 1503 03.82 (P04C01)

## ANNEX TO THE EUROPEAN SEARCH REPORT
## ON EUROPEAN PATENT APPLICATION NO.

EP 11 15 8489

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2011

| Patent document cited in search report | | Publication date | Patent family member(s) | | Publication date |
|---|---|---|---|---|---|
| EP 1903671 | A2 | 26-03-2008 | JP 2008079387 A | | 03-04-2008 |
| | | | US 2008069547 A1 | | 20-03-2008 |
| JP 2004040883 | A | 05-02-2004 | CN 1497832 A | | 19-05-2004 |
| | | | DE 60318630 T2 | | 15-01-2009 |
| | | | EP 1378419 A2 | | 07-01-2004 |
| | | | JP 3849979 B2 | | 22-11-2006 |
| | | | US 2005045414 A1 | | 03-03-2005 |
| JP 2006129632 | A | 18-05-2006 | NONE | | |
| US 6329781 | B1 | 11-12-2001 | JP 3396440 B2 | | 14-04-2003 |
| | | | JP 2000228892 A | | 15-08-2000 |
| WO 2008152929 | A1 | 18-12-2008 | NONE | | |
| WO 2009063786 | A1 | 22-05-2009 | CN 101855825 A | | 06-10-2010 |
| | | | EP 2211457 A1 | | 28-07-2010 |
| | | | US 2010219780 A1 | | 02-09-2010 |
| JP 2008160912 | A | 10-07-2008 | NONE | | |
| US 5877603 | A | 02-03-1999 | DE 69630667 D1 | | 18-12-2003 |
| | | | DE 69630667 T2 | | 13-05-2004 |
| | | | EP 0793338 A1 | | 03-09-1997 |
| | | | WO 9710643 A1 | | 20-03-1997 |
| | | | JP 9084400 A | | 28-03-1997 |
| JP 2006141095 | A | 01-06-2006 | NONE | | |

EPO FORM P0459

For more details about this annex : see Official Journal of the European Patent Office, No. 12/82

**EP 2 366 603 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008079387 A
- JP 2004040883 A